# EUROPÄISCHE PATENTANMELDUNG

(11) **EP 2 110 699 A2**
(43) Veröffentlichungstag der Anmeldung: **21.10.2009**
(21) Anmeldenummer: 09004517.0
(22) Anmeldetag: 28.03.2009
(51) Int. Cl.: G02B 26/08, G02B 27/09, G02B 27/30, G02B 7/10, G01S 7/481

(54) **Vorrichtung und Verfahren zum Beleuchten einer Objektszene**

(30) Priorität: 19.04.2008 DE 102008019850
(71) Anmelder: Diehl BGT Defence GmbH & Co.KG, 88662 Überlingen (DE)
(72) Erfinder: Rungenhagen, Matthias, 88662 Überlingen (DE); Löbau, Jörg Dr., 88633 Heiligenberg (DE)
(74) Vertreter: Diehl Patentabteilung

(57) **Zusammenfassung**

Die Erfindung geht aus von einer Vorrichtung zum Beleuchten einer Objektszene (8) mit einer Strahlungsquelle (18) und einer Schwenkeinheit (24) zum Schwenken eines von der Strahlungsquelle (18) in die Objektszene (8) gerichteten Strahls (10).

Um die Objektszene (8) relativ stabil gegenüber Beschleunigungen und Erschütterungen mit einer hohen Abbildungsgüte und hohem Kontrast durch geringe Streustrahlung abbilden zu können, wird vorgeschlagen, dass die Vorrichtung eine Anzahl von mikrooptischen Rastern (36, 38, 40) der Schwenkeinheit (24) zum Schwenken des Strahls (10) und eine Optik (26) zur Veränderung der Strahldivergenz des in die Objektszene (8) gerichteten Strahls (10) umfasst.

## Beschreibung

Die Erfindung betrifft eine Vorrichtung zum Beleuchten einer Objektszene mit einer Strahlungsquelle und einer Schwenkeinheit zum Schwenken eines von der Strahlungsquelle in die Objektszene gerichteten Strahls. Außerdem betrifft die Vorrichtung ein Verfahren zum Beleuchten einer Objektszene mit Licht aus einer Strahlungsquelle, das von einer Schwenkeinheit in der Objektszene geschwenkt wird.

Laserradare (LADAR) sind für die Hinderniswarnung und Zielerkennung, insbesondere für Luftfahrzeuge und Flugkörper aber auch für Unterwasserfahrzeuge, besonders gut geeignet. Für eine präzise Hinderniswarnung oder Zielerkennung ist es vorteilhaft, ein bildgebendes Verfahren anzuwenden, bei dem eine Objektszene in eine Matrix aus Abschnitten aufgeteilt wird und die einzelnen Abschnitte entweder parallel oder sequenziell mit hoher Geschwindigkeit abgetastet werden. Hierzu ist es notwendig, den Laserstrahl in einem großen Winkelbereich auszulenken. Für eine Laserstrahlsteuerung mit einer weiten Auslenkung werden üblicherweise Systeme aus rotierenden Spiegeln oder Prismen eingesetzt. Diese Systeme ermöglichen eine schnelle und kontinuierliche Strahlsteuerung. Eine richtungsselektive Auslenkung ist mit einer kardanischen Aufhängung möglich, wie beispielsweise aus der DE1020004031097A1 bekannt ist. Beide Systeme sind aufgrund ihrer relativ großen Massen und der bewegten Komponenten empfindlich gegenüber Beschleunigungen und Vibrationen.

Es ist eine Aufgabe der vorliegenden Erfindung, eine Vorrichtung und ein Verfahren zum Beleuchten einer Objektszene anzugeben, die relativ stabil gegen Beschleunigungen sind und eine weite Strahlablenkung mit einer hohen Abbildungsgüte verbinden.

Die auf die Vorrichtung gerichtete Aufgabe wird durch eine Vorrichtung der eingangs genannten Art gelöst, die erfindungsgemäß eine Anzahl von mikrooptischen Rastern der Schwenkeinheit zum Schwenken des Strahls und eine Optik zur Veränderung der Strahldivergenz des in die Objektszene gerichteten Strahls aufweist. Durch die Kombination von mikrooptischen Rastern und der die Strahldivergenz verändernden Optik kann ein aktiv die Objektszene abtastender Beleuchtungsstrahl, beispielsweise ein Laserstrahl, über einen weiten Winkelbereich verschwenkt werden. Durch die Veränderung der Strahldivergenz des üblicherweise kollimierten Abtaststrahls kann die Auflösung der Abtastung soweit gesteigert werden, dass auch zwischen Beugungsmaxima, die von den mikrooptischen Rastern verursacht werden, liegende Objekte erkannt werden können.

Bei einer Richtungssteuerung des optischen Strahls zur Beleuchtung der Objektszene durch mikrooptische Raster tritt der Effekt der Beugung auf. Ist die Strahldivergenz des Abtaststrahls geringer als der Winkel zwischen zwei benachbarten Beugungsstrukturen, so kann es vorkommen, dass ein Objekt im Bereich zwischen zwei benachbarten Beugungsstrukturen, nicht vom Strahl erfasst wird, da ein Lenken von Strahlung in die Richtung des Objekts durch den Beugungseffekt unterbunden oder zumindest stark verringert wird. Beim Verwenden eines Laserstrahls als Strahl zum Beleuchten der Objektszene ist dieser Effekt besonders störend, da ein Laserstrahl mit einer besonders geringen Strahldivergenz kollimiert ist. Die Strahldivergenz kann mit Hilfe der Optik so verändert werden, dass durch den Strahl auch solche Blickwinkel erfasst werden, die in Beugungsminima der mikrooptischen Raster liegen.

Die Veränderung der Strahldivergenz kann ein Aufweiten oder ein Zusammenführen sein. Die Strahlungsquelle ist zweckmäßigerweise eine Laserquelle. Als optischer Strahl wird ein Strahl mit elektromagnetischer Strahlung im sichtbaren, infraroten oder ultravioletten Spektralbereich verstanden. Die mikrooptischen Raster sind zweckmäßigerweise Mikrolinsenfelder. Mikrolinsenfelder sind mit geringer Trägheit elektronisch steuerbar und es sind große Stellgenauigkeiten und hohe räumliche Auflösungen realisierbar. Die mikrooptischen Raster sind zweckmäßigerweise lateral gegeneinander verschiebbar und bilden afokale Systeme, wie Teleskope, zweckmäßigerweise Keppler-Teleskope. Durch die laterale Verschiebung wird ein darauf einfallender optischer Strahl abgelenkt. Insbesondere sind die Mikrolinsenfelder nach Art eines Blazegitters ausgeführt. Ein Mikrolinsenfeld kann eine zweidimensionale, rasterförmige Anordnung von kleinen Linsen sein, wobei jeweils zwei oder mehr gegenüberstehende kleine Linsen ein Teleskop bilden können. Ein kollimiert einfallender Strahl, beispielsweise ein Laserstrahl, wird durch laterale Verschiebung eines der Raster gegenüber dem anderen Raster abgelenkt und tritt auch wieder kollimiert aus der Anordnung heraus. Als Stellelemente für die benötigte Verschiebung der Raster relativ zueinander können Piezoaktuatoren verwendet werden.

Der Divergenzwinkel des Strahls nach der Optik wird zweckmäßigerweise an den Winkel zwischen den Beugungsordnungen beziehungsweise Beugungsmaxima angepasst. Dadurch ist es möglich, den gesamten ansteuerbaren Winkelbereich vollständig und ohne Lücken abzutasten. Die Optik kann ein Objektiv sein, im einfachsten Fall eine einzige Linse. Die Optik ist vorteilhafterweise im Strahlengang hinter der Schwenkeinheit angeordnet. Umfasst die Strahlungsquelle ein Mittel zum Kollimieren des Strahls, beispielsweise eine Laseranordnung, durch die kollimiertes Licht ausgesandt wird, kann die Optik den zuvor kollimierten Strahl aufgeweitet in die Objektszene leiten.

In einer vorteilhaften Ausführungsform der Erfindung ist die Optik so ausgeführt, dass sie einen perfekt kollimierten Strahl der Strahlungsquelle zumindest so aufweitet, dass seine Strahlungsamplitude in einem mittig zwischen zwei benachbarten Beugungsmaxima der Schwenkeinheit liegenden Strahlzentrum nicht unter 50 Prozent der Amplitude der Beugungsmaxima liegt. Auf diese Weise ist gewährleistet, dass auch zwischen den Beugungsmaxima beziehungsweise Beugungsordnungen liegende Objekte ausreichend stark abgetastet werden können.

Eine noch homogenere Beleuchtung der Objektszene kann erreicht werden, wenn die Optik so ausgeführt ist, dass sie einen kollimierten Strahl so aufweitet, dass zwei benachbarte Beugungsmaxima bei einem mittig zwischen ihnen liegenden Strahlzentrum nicht auflösbar sind, also kein lokales Minimum in der Amplitude zwischen den benachbarten Beugungsordnungen vorliegt.

Weist die Optik einen Divergenzwinkel auf, der zumindest so groß ist, wie der Divergenzwinkel zwischen zwei benachbarten Beugungsmaxima, kann eine sehr gleichmäßige Beleuchtung der Objektszene erreicht werden. Sind benachbarte Beugungsordnungen in senkrecht zueinander stehenden Bildrichtungen unterschiedlich weit voneinander beabstandet, ist der Divergenzwinkel der Optik zweckmäßigerweise so groß wie der größte Divergenzwinkel zwischen zwei benachbarten Beugungsmaxima.

Eine weitere Homogenisierung der Beleuchtung der Objektszene kann erreicht werden, wenn die Optik einen Divergenzwinkel aufweist, der zumindest so groß ist, wie der Divergenzwinkel zwischen zwei im zweidimensionalen Raum diagonal gegenüberliegenden Beugungsmaxima.

Wird bei einem sehr divergent aufgeweiteten Beleuchtungsstrahl ein größerer Bereich der Objektszene gleichzeitig beleuchtet, tritt Streuung an allen Streuzentren auf, die durch den stark divergenten Lichtstrahl beleuchtet werden, wodurch der Bildkontrast schlecht ist. Hierdurch ist eine effektiv nutzbare Reichweite des Strahls beziehungsweise einer die Objektszene abtastenden Abbildungseinheit gering. Durch eine geringe Divergenz wird nur Streuung aus einem kleinen Raumwinkelelement erzeugt, die die Bildqualität weniger stört. Weist die Optik einen Divergenzwinkel auf, der maximal so groß ist, wie der doppelte Divergenzwinkel zwischen zwei benachbarten Beugungsmaxima, so kann eine geringe Streuung mit einer homogenen Beleuchtung der Objektszene verbunden werden.

In einer weiteren vorteilhaften Ausführungsform der Erfindung umfasst die Optik ein Zoomobjektiv. Hierdurch kann eine Divergenz des die Objektszene abtastenden Strahls an einen Winkel der Beugungsordnungen zueinander angepasst werden. Eine homogene Beleuchtung der Objektszene kann bei unterschiedlichen Wellenlängen des beleuchtenden Strahls sichergestellt werden.

Die auf das Verfahren gerichtete Aufgabe wird durch ein Verfahren der eingangs genannten Art gelöst, bei dem der Strahl erfindungsgemäß durch eine Anzahl von mikrooptischen Rastern der Schwenkeinheit geschwenkt wird und mit einem durch eine im Strahlengang hinter den Rastern angeordnete Optik aufgeweiteten Divergenzwinkel in die die Objektszene gerichtet wird. Es kann die Schwenkbarkeit eines kollimierten Strahls durch eine robuste Schwenkvorrichtung verbunden werden mit einer homogenen Beleuchtung der Objektszene. Der Divergenzwinkel kann von einer Brennweite der Optik abhängen. Je größer die Brennweite ist, desto weniger aufgeweitet wird der Strahl durch die Optik.

In einer vorteilhaften Ausführungsform des Verfahrens wird ein Bereich der Objektszene Abschnitt für Abschnitt schrittweise abgescannt, indem der Strahl in die Richtung eines Beugungsmaximums der Raster gelenkt wird, der Strahl eine Weile ruhend in diesem Abschnitt verbleibt, dann in die Richtung eines benachbarten Beugungsmaximums gelenkt wird und wiederum eine Weile ruhend in diesem Abschnitt der Objektszene verbleibt, und so weiter. Es kann hierdurch eine gleichmäßige Ausleuchtung der Objektszene beidseitig in Richtung der Beugungsmaxima beziehungsweise Beugungsordnungen erreicht werden, sodass kleine Objekte links und rechts einer Richtung eines Beugungsmaximums gleich stark beleuchtet und somit äquivalent abgebildet werden können.

In weiteren vorteilhaften Ausführungsform der Erfindung wird der Strahl in die Richtung mittig zwischen zwei Beugungsmaxima der Raster gelenkt, er verbleibt dort in diesem Abschnitt der Objektszene eine Weile ruhend, wird dann in die Richtung mittig zwischen eines der Beugungsmaxima und ein benachbartes Beugungsmaximum gelenkt und verbleibt in diesem neuen Abschnitt der Objektszene wiederum eine Weile ruhend, und so weiter. Bereiche zwischen den Beugungsmaxima können hierdurch besonders intensiv ausgeleuchtet werden, sodass dort vorhandene Objekte beispielsweise nicht weniger stark beleuchtet werden als solche, die in der Richtung eines Beugungsmaximums liegen.

Vorteilhafterweise wird ein Blickfeld eines Matrixdetektors durch ein Objektiv so in die Objektszene gerichtet, dass jedem Abschnitt ein Detektorelement des Matrixdetektors zugeordnet ist. Ein Detektorelement kann hierbei ein Bildpunkt oder Pixel des Matrixdetektors sein. Auf diese Weise kann ein aus Pixeln zusammengesetztes Bild Pixel für Pixel erzeugt werden, wobei jedes Pixel einen Abschnitt der Objektszene abbildet, der zum Zeitpunkt der Aufnahme vom Strahl beleuchtet wird.

Eine weitere Variation der Erfindungen sieht vor, dass der Strahl mit einem Zoomobjektiv der Optik so weit aufgeweitet wird, dass ein Bereich beleuchtet wird, ein Bild aus dem Bereich oder des Bereichs mit Hilfe eines Detektors aufgenommen wird und anschließend die Divergenz des Strahls auf einen Abschnitt des Bereichs reduziert wird und der Bereich Abschnitt für Abschnitt beleuchtend abgescannt wird. Es kann zunächst ein gröberes und übergeordnetes Bild erzeugt werden, um anschließend den gesamten Bereich oder nur einen Teil davon Abschnitt für Abschnitt abzuscannen und Einzelbilder, die den Abschnitten zugeordnet sind, aufzunehmen, um zu einem größeren Detailreichtum zu gelangen.

Außerdem kann mit Vorteil ein Bereich der Objektszene Abschnitt für Abschnitt schrittweise abgescannt und anschließend der Bereich mit veränderter Divergenz Abschnitt für Abschnitt schrittweise abgescannt werden. So kann zunächst mit größeren Abschnitten und anschließend mit kleineren Abschnitten, dafür feiner aufgelöst und mit höherem Kontrast, gearbeitet werden oder andersherum. Die Größe der Abschnitte ist hierbei zweckmäßigerweise an den Divergenzwinkel angepasst, insbesondere vor und nach der Veränderung der Divergenz.

Bei einer Hinderniswarnung für Unterwasserfahrzeuge kommt es besonders auf die Reichweite einer eingesetzten Abbildungsvorrichtung zum Abtasten der Objektszene an. Unter Wasser ist eine solche Reichweite durch eine starke Streuung von Licht im Wasser erheblich behindert. Eine bildstörende Streuung kann niedrig gehalten werden, wenn bei einem Abtasten einer Objektszene mit einem aktiven Strahl dieser eine geringe Divergenz aufweist. Daher ist das Abtasten einer Objektszene von einem Unterwasserfahrzeug aus mit einem kollimierten Strahl, beispielsweise einem Laser, insbesondere im grünen Lichtbereich, vorteilhaft. Durch die Divergenz verändernde Optik kann die Störung durch Beugungseffekte gering gehalten bleiben. Die Anwendung des Verfahrens und der Vorrichtung in einer Unterwasserumgebung ist somit vorteilhaft. Zweckmäßigerweise ist daher die Objektszene eine Unterwasserumgebung und es wird aus der Objektszene reflektiertes Licht der Strahlungsquelle auf einen Detektor geleitet und dort erfasst.

Weitere Vorteile ergeben sich aus der folgenden Zeichnungsbeschreibung. In der Zeichnung sind Ausführungsbeispiele der Erfindung dargestellt. Die Zeichnung und die Beschreibung enthalten zahlreiche Merkmale in Kombination, die der Fachmann zweckmäßigerweise auch einzeln betrachten und zu sinnvollen weiteren Kombinationen zusammenfassen wird.

### Es zeigen:

- Fig. 1: eine Frontpartie eines Unterwasserfahrzeugs mit einem Hinderniswarnsystem,
- Fig. 2: eine Schwenkeinheit für einen aktiven optischen Strahl des Hinderniswarnsystems,
- Fig.3: eine Abbildung eines unaufgeweiteten aktiven Strahls in einer Objektszene,
- Fig. 4: eine Abbildung eines aufgeweiteten aktiven Strahls in der Objektszene,

- Fig. 5 und: Fig. 6 die Strahlungsamplituden der Strahlen aus den Figuren 3 und 4 aufgetragen gegen die x-Achse,
- Fig. 7 und: Fig. 8 eine Abbildung eines weiter aufgeweiteten aktiven Strahls und dessen Strahlungsamplitude gegen die x-Achse und
- Fig. 9: eine Einteilung der Objektszene in Abschnitte, die vom aktiven Strahl jeweils als Ganzes beleuchtet werden.

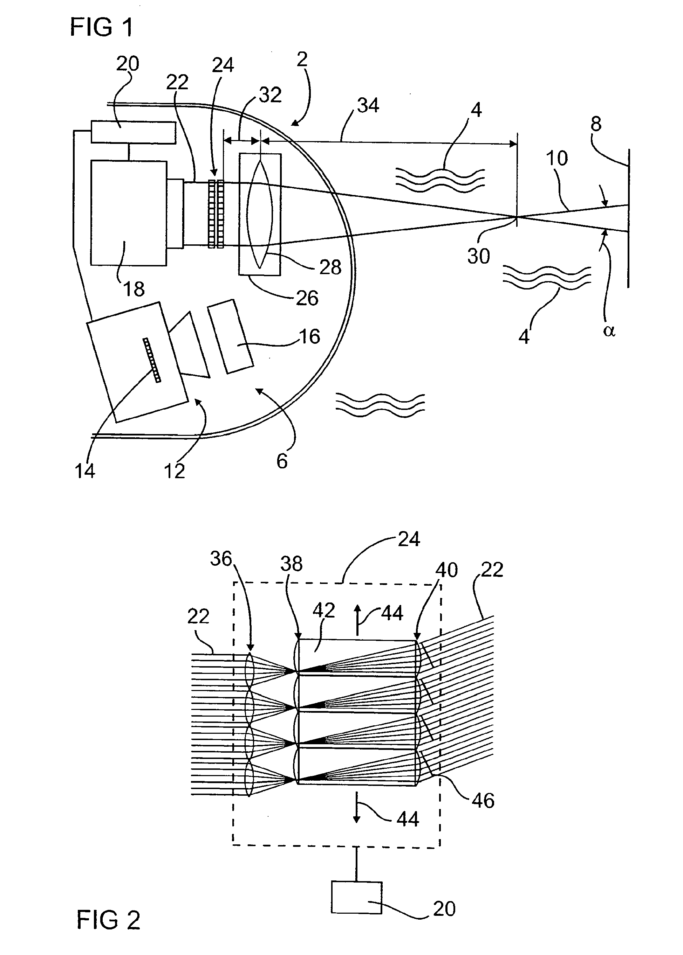

In Fig. 1 ist ein kleiner Abschnitt einer Frontpartie eines Wasserfahrzeugs 2 dargestellt, z.B. eines U-Boots, das auf einer Fahrt unter Wasser 4 ist. Das Wasserfahrzeug 2 ist mit einem Hinderniswarnsystem 6 ausgestattet, mit dem ein Raumwinkel vor dem Wasserfahrzeug 2 optisch überwacht wird. Die Überwachung geschieht, indem eine Objektszene 8 im Raumwinkel mit einem aktiven optischen Strahl 10 beleuchtet wird und von der Objektszene 8 reflektiertes Licht von einer Empfangseinrichtung 12 mit einem Matrixdetektor 14 und einem davor angeordneten Objektiv 16 registriert wird. Aus Daten der Empfangseinrichtung 12 kann ein computergestütztes Prozessmittel 20 mit Hilfe einer Bildverarbeitung Hindernisse erkennen und eine entsprechende Hinderniswarnung ausgeben.

Zur Bildaufnahme wird eine Strahlungsquelle 18, z.B. ein im grünen Wellenlängenbereich aktiver Laser, vom Prozessmittel 20 angesteuert, die daraufhin einen kollimierten Laserstrahl 22 aussendet. Dieser wird durch eine Schwenkeinheit 24 gelenkt, die den Laserstrahl 22 zwar zweidimensional schwenken kann, die Kollimation jedoch unverändert belässt. Anschließend tritt der Laserstrahl 22 durch eine Optik 26, die mit beispielsweise einer Linse 28 die Strahldivergenz des Laserstrahls 22 von der verschwindenden oder sehr geringen Divergenz des kollimierten Laserstrahls 22 verändert, so dass die Kollimation aufgehoben ist. In Fig. 1 ist der aus der Optik 26 austretende Strahl 10 nunmehr auf einen Brennpunkt 30 fokussiert, wobei ebenso eine Aufweitung der Kollimation durch eine Zerstreuungslinse denkbar ist. Der Abstand 32, mit der die Optik 26 bzw. Linse 28 von der Schwenkeinheit 24 beabstandet ist, beträgt weniger als 1/10 der Brennweite 34 der Optik 26. Der Strahl 10 verlässt nun die Vorrichtung zum Beleuchten der Objektszene 8 und das Wasserfahrzeug 2, trifft auf die Objektszene 8 und wird dort reflektiert. Reflektierte Strahlung wird von der Empfangseinrichtung 12 aufgefangen.

Die Schwenkeinheit 24 ist in Fig. 2 detaillierter dargestellt. Sie umfasst drei als Mikrolinsenfelder ausgeführte mikrooptische Raster 36, 38, 40, von denen die Raster 38, 40 an einem strahlungsdurchlässigen Substrat 42 befestigt sind und mit einem Aktuator gemeinsam lateral gegenüber dem Raster 36 verschiebbar sind, wie durch die Pfeile 44 angedeutet ist. Die Raster 36, 38, 40 umfassen jeweils 256 x 256 Mikrolinsen der Größe von einigen bis vielen 10 µ, wobei von jedem Raster 36, 38, 40 jeweils eine Mikrolinse einander zugeordnet sind, also immer drei Mikrolinsen einander zugeordnet sind und ein afokales System (Teleskop) bilden. Das Raster 38 ist hierbei in der Zwischenbildebene angeordnet. Durch eine laterale Verschiebung der Raster 38, 40 wird eine Wellenfront 46 und damit der Laserstrahl 22 abgelenkt, wie durch die Wellenfronten 46 dargestellt ist.

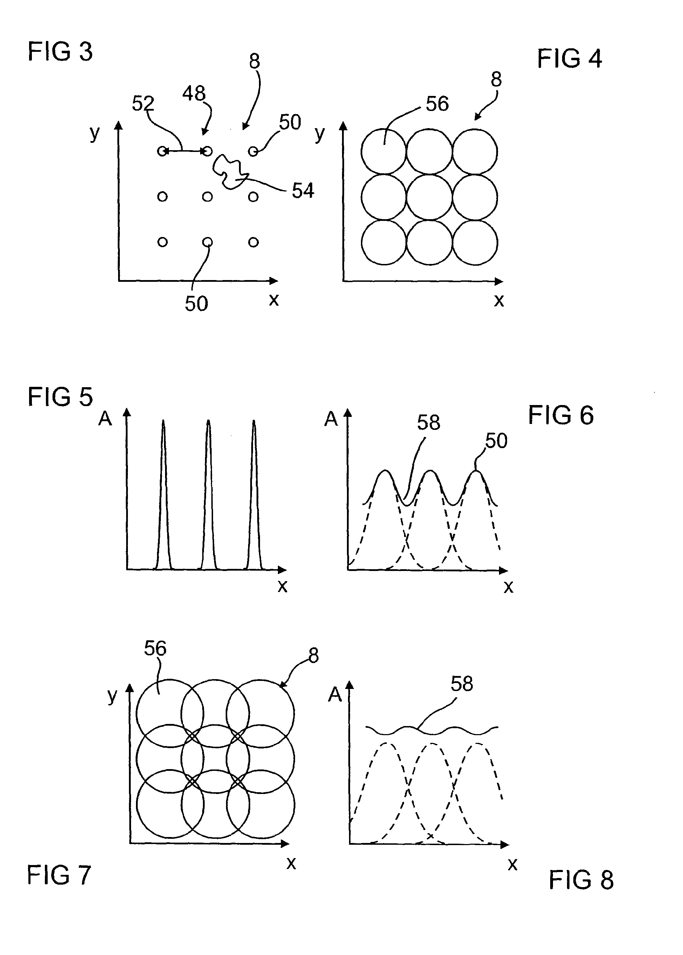

Fig. 3 zeigt ein zweidimensionales Beugungsmuster 48 in einer x,y-Fläche in der Objektszene 8, das der Laserstrahl 22 ohne die Optik 26 beleuchten würde. Dargestellt sind kleine kreisförmige beleuchtete Flächen um Beugungsmaxima 50 gegen den dunklen Hintergrund der Objektszene 8. Verursacht durch die Mikrostruktur der Raster 36, 38, 40 wird der Laserstrahl 22 an den Rastern 36, 38, 40 gebeugt und kann die Objektszene 8 nur in einem kleinen Bereich um die Orte der Beugungsmaxima 50 beleuchten. Bei perfekter Kollimation ist der Bereich nur so groß wie die Apertur der Strahlungsquelle, in der Realität, auch bereits durch Beugungseffekte an der Apertur, etwas größer.

In Fig. 3 ist nicht zwischen Haupt- und Nebenmaxima bzw. der ersten und weiteren Beugungsordnungen unterschieden, da alle Beugungsmaxima 50 bei entsprechender Auslenkung des Laserstrahls 22 Haupt- oder Nebenmaximum bilden können. Die Beugungsmaxima 50 sind um einen Divergenzwinkel 52 beabstandet, im Folgenden auch vereinfacht Divergenz genannt, der sich aus dem Kotangens des räumlichen Abstands der Beugungsmaxima 50 zueinander zu deren Entfernung von der Schwenkeinheit 24 ergibt. Ein Objekt 54 in der Objektszene 8 zwischen den beleuchteten Bereichen um die Beugungsmaxima 50 kann bei dieser Konfiguration nicht beleuchtet und dementsprechend vom Hinderniswarnsystem 6 nicht erkannt werden.

Die Beleuchtung der Objektszene 8 durch den von der Optik 26 aufgeweiteten Strahl 10 ist in Fig. 4 dargestellt. Die Beugungsmaxima 50 sind zu größeren Beleuchtungsflächen 56 aufgeweitet, die um den Ort der Beugungsmaxima 50 liegen und deren Durchmesser vom Divergenzwinkel bzw. der Divergenz der Optik 26 und dem Abstand von der Schwenkeinheit 24 bestimmt ist. Bei dem in Fig. 4 dargestellten Beispiel ist die Divergenz der Optik 26 gleich der Divergenz der Beugung, also der durch die Brennweite 34 bestimmte Divergenzwinkel α (Fig. 1) gleich dem Divergenzwinkel 52, so dass sich die Beleuchtungsflächen 56 - bei ideal gedachter Kollimation vor der Optik 26 und keiner weiteren Strahlaufweitung als durch die Optik 26 - gegenseitig berühren. Die Objektszene 8 wird hierdurch weitgehend ausgeleuchtet.

Die in den Figuren 3 und 4 dargestellten Beugungsmaxima 50 bzw. beleuchteten Flächen 56 sind in den Figuren 5 und 6 in ihrer Amplitude A der Beleuchtungsstärke gegen die x-Richtung der Objektszene 8 aufgetragen. Während die unaufgeweiteten Beugungsmaxima 50 die Objektszene 8 nur punktuell beleuchten - die Gaussform der Pulse ist durch weitere Effekte bedingt, die hier nicht betrachtet werden - berühren sich die Beleuchtungsflächen 56, deren einzelne Amplituden gestrichelt dargestellt sind. Durch ihre Gaussform überdecken sie sich sogar. Die Überdeckung ist zumindest so weit, dass die Strahlungsamplitude 58 sowohl in x- als auch in y-Richtung mittig zwischen zwei benachbarten Beugungsmaxima 50 bei einem dorthin ausgerichteten Strahlzentrum des Strahls 10 stets über 50% der Maxima der benachbarten Beleuchtungsflächen 56 bleibt. Dies gilt zumindest für eine Schnittlinie durch die Orte der Beugungsmaxima 50. Bei dem in Fig. 6 gezeigten Beispiel fällt die Strahlungsamplitude 58 nicht unter 60%. Es wird hierdurch eine recht gute Gleichmäßigkeit der Beleuchtung der Objektszene 8 erreicht.

Eine noch weitergehende Überdeckung der Beleuchtungsflächen 56 ist in Figur 7 in der Form der Beleuchtungsflächen 56 und in Fig. 8 in Form der Strahlungsamplitude 58 gegen die x-Achse dargestellt. Die Optik 26 ist hier mit einem Divergenzwinkel eingestellt, der so groß wie der Divergenzwinkel zwischen zwei im zweidimensionalen x,y-Raum diagonal gegenüber liegenden Beugungsmaxima 50 ist. Die Überdeckung der Beleuchtungsflächen 56 ist so weitgehend, dass kein Punkt der Objektszene 8 im Schwenkbereich der Schwenkeinheit 24 unbeleuchtet bleibt, also jeder Punkt der Objektszene 8 bei entsprechender Ausrichtung des Strahls 10 beleuchtet werden kann. Der Verlauf der Strahlungsamplitude 58 in x- und y-Richtung ist hierbei sehr gleichmäßig, wie in Fig. 8 dargestellt ist.

Um zu viel Streulicht in der Empfangseinrichtung 12 zu vermeiden, sollte die Divergenz der Optik 26 nicht zu groß sein. Eine geeignete Obergrenze ist, dass die Optik 26 maximal einen Divergenzwinkel aufweist, der so groß ist, wie der doppelte Divergenzwinkel 52 zwischen zwei benachbarten Beugungsmaxima 50. Es kann jedoch sinnvoll sein, kurzfristig mit einer höheren Divergenz zu arbeiten, um eine Übersichtsabbildung der Objektszene 8 zu erstellen, auf deren guten Kontrast verzichtet werden kann, um danach die Objektszene Abschnitt für Abschnitt mit geringerer Divergenz kontrastreich aufzunehmen. Um diese Arbeitsweise einfach realisieren zu können, ist die Optik 26 mit einem Zoomobjektiv ausgestattet - in Fig. 1 kann dieses symbolisch durch die Linse 28 dargestellt sein, mit dem die Brennweite 34 und damit die Divergenz der Optik 26 in einem vorbestimmten Bereich eingestellt werden kann, zweckmäßigerweise gesteuert vom Prozessmittel 20.

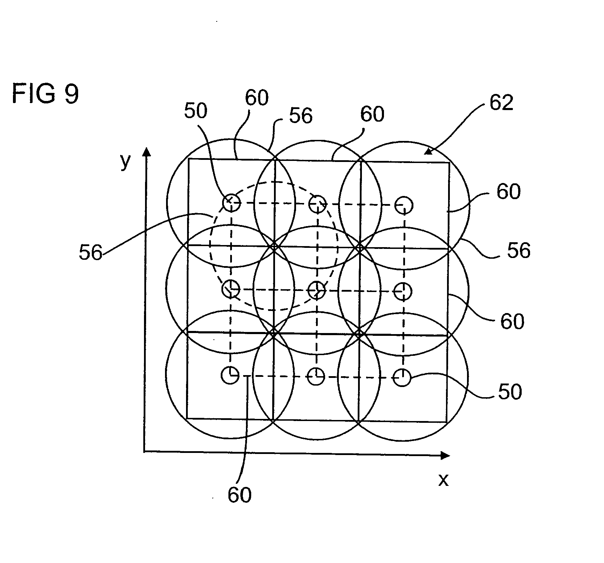

Zum optischen Abtasten der Objektszene 8 wird die Schwenkeinheit 24 so ausgerichtet, dass der Strahl 10 einen Abschnitt 60, der in Fig. 9 dargestellt ist, teilweise oder - wie in Fig. 9 dargestellt ist - vollständig bedeckt. Die Divergenz der Optik 26 kann hierzu auf den Diagonalenwinkel des Abschnitts 60 eingestellt werden. Das Objektiv 16 der Empfangseinrichtung 12 kann nun so eingestellt sein, dass der Abschnitt 60 auf einen einzigen Bildpunkt bzw. Pixel des Matrixdetektors 14 abgebildet wird. Einfallende Strahlung aus diesem Abschnitt 60 wird nun von der Empfangseinrichtung 12 registriert.

Die Raster 38, 40 werden dann so gegenüber dem Raster 36 verschoben, dass ein benachbarter Abschnitt 60 vom Strahl 10 beleuchtet wird und von dort reflektierte Strahlung auf einen benachbarten Bildpunkt des Matrixdetektors 14 abgebildet wird. Auf diese Weise kann ein Bereich der Objektszene 8 Abschnitt 60 für Abschnitt 60 schrittweise abgescannt werden, indem der Strahl 10 nacheinander in die Richtung der Beugungsmaxima 50 gelenkt wird und der entsprechende Abschnitt 60 jeweils auf dem Matrixdetektor abgebildet wird. Jedem Abschnitt 60 ist so ein Detektorelement des Matrixdetektors 14 zugeordnet.

Alternativ oder zusätzlich kann der Strahl 10 in die Richtung mittig zwischen zwei Beugungsmaxima 50 gelenkt werden, wie in Fig. 9 durch die gestrichelten Beleuchtungsflächen 56 und die zugehörigen gestrichelten Abschnitte 60 dargestellt ist.

Eine besonders schnelle Hinderniswarnung kann erreicht werden, wenn die Objektszene 8 zunächst mit einer größeren Divergenz der Optik 26 abgescannt wird, z.B. indem einem Abschnitt 60 jeweils 2 x 2 oder 3 x 3 Bildpunkte des Matrixdetektors 14 zugeordnet sind und jeder Abschnitt 60 gleichzeitig auf diese Bildpunkte abgebildet wird. Ist der Bereich 62, der z.B. aus der Summe aller Abschnitte 60 zusammengesetzt ist, durchgescannt, kann die Divergenz durch das Zoomobjektiv verringert werden und der Bereich 62 - oder nur ein besonders interessierender Teil davon - Pixel für Pixel, also Abschnitt für Abschnitt, mit weniger Streulicht und hohem Kontrast aufgenommen werden.

### Bezugszeichenliste

- 2: Wasserfahrzeug
- 4: Wasser
- 6: Hinderniswarnsystem
- 8: Objektszene
- 10: Strahl
- 12: Empfangseinrichtung
- 14: Matrixdetektor
- 16: Objektiv
- 18: Strahlungsquelle
- 20: Prozessmittel
- 22: Laserstrahl
- 24: Schwenkeinheit
- 26: Optik
- 28: Linse
- 30: Brennpunkt
- 32: Abstand
- 34: Brennweite
- 36: Raster
- 38: Raster
- 40: Raster
- 42: Substrat
- 44: Pfeile
- 46: Wellenfront
- 48: Beugungsmuster
- 50: Beugungsmaximum
- 52: Divergenzwinkel
- 54: Objekt
- 56: Beleuchtungsfläche
- 58: Strahlungsamplitude
- 60: Abschnitt
- 62: Bereich

## Patentansprüche

1. Vorrichtung zum Beleuchten einer Objektszene (8) mit einer Strahlungsquelle (18) und einer Schwenkeinheit (24) zum Schwenken eines von der Strahlungsquelle (18) in die Objektszene (8) gerichteten Strahls (10),
**gekennzeichnet**
**durch** eine Anzahl von mikrooptischen Rastern (36, 38, 40) der Schwenkeinheit (24) zum Schwenken des Strahls (10) und eine Optik (26) zur Veränderung der Strahldivergenz des in die Objektszene (8) gerichteten Strahls (10).

2. Vorrichtung nach Anspruch 1,
**dadurch gekennzeichnet,**
**dass** die Optik (26) einen kollimierten Strahl (22) der Strahlungsquelle (18) zumindest so weit aufweitet, dass seine Strahlungsamplitude (A) in einem mittig zwischen zwei benachbarten Beugungsmaxima (50) der Schwenkeinheit (24) liegenden Strahlzentrum nicht unter 50% der Amplitude (A) der Beugungsmaxima (50) liegt.

3. Vorrichtung nach Anspruch 1 oder 2,
**dadurch gekennzeichnet,**
**dass** die Optik (26) einen Divergenzwinkel (α) aufweist, der zumindest so groß ist, wie der Divergenzwinkel (52) zwischen zwei benachbarten Beugungsmaxima (52).

4. Vorrichtung nach einem der vorhergehenden Ansprüche,
**dadurch gekennzeichnet,**
**dass** die Optik (26) einen Divergenzwinkel (α) aufweist, der zumindest so groß ist, wie der Divergenzwinkel zwischen zwei im zweidimensionalen Raum diagonal gegenüber liegenden Beugungsmaxima (50).

5. Vorrichtung nach einem der vorhergehenden Ansprüche,
**dadurch gekennzeichnet,**
**dass** die Optik (26) einen Divergenzwinkel (α) aufweist, der maximal so groß ist, wie der doppelte Divergenzwinkel (52) zwischen zwei benachbarten Beugungsmaxima (50).

6. Vorrichtung nach einem der vorhergehenden Ansprüche,
**dadurch gekennzeichnet,**
**dass** die Optik (26) ein Zoomobjektiv aufweist.

7. Verfahren zum Beleuchten einer Objektszene (8) mit Licht aus einer Strahlungsquelle (18), das von einer Schwenkeinheit (24) in der Objektszene (8) geschwenkt wird,
**dadurch gekennzeichnet,**
**dass** der Strahl (10) durch eine Anzahl von mikrooptischen Rastern (36, 38, 40) der Schwenkeinheit (24) geschwenkt und mit einem durch eine Optik (26) aufgeweiteten Divergenzwinkel (α) in die Objektszene (8) gerichtet wird.

8. Verfahren nach Anspruch 7,
**dadurch gekennzeichnet,**
**dass** ein Bereich (62) der Objektszene (8) Abschnitt (60) für Abschnitt (60) schrittweise abgescannt wird, indem der Strahl (10) in die Richtung eines Beugungsmaximums (50) der Raster (36, 38, 40) gelenkt wird, der Strahl (10) in diesem Abschnitt (60) der Objektszene (8) eine Weile ruhend verbleibt, dann in die Richtung eines benachbarten Beugungsmaximums (50) gelenkt wird und in diesem Abschnitt (60) der Objektszene (8) wieder eine Weile ruhend verbleibt, usw.

9. Verfahren nach Anspruch 8,
**dadurch gekennzeichnet,**
**dass** ein Blickfeld eines Matrixdetektors (14) durch ein Objektiv (16) so in die Objektszene (8) gerichtet wird, dass jedem Abschnitt (60) ein Detektorelement des Matrixdetektors (14) zugeordnet ist.

10. Verfahren nach einem der Ansprüche 7 bis 9,
**dadurch gekennzeichnet,**
**dass** der Strahl (10) mit einem Zoomobjektiv der Optik (26) soweit aufgeweitet wird, dass ein Bereich (62) beleucht wird, ein Bild aus dem Bereich (62) mit Hilfe eines Detektors (14) aufgenommen wird und anschließend die Divergenz des Strahls (10) auf einen Abschnitt (60) des Bereichs (60) reduziert wird und der Bereich (62) Abschnitt (60) für Abschnitt (60) beleuchtend abgescannt wird.

11. Verfahren nach einem der Ansprüche 7 bis 10,
**dadurch gekennzeichnet,**
**dass** ein Bereich (62) der Objektszene (8) Abschnitt (60) für Abschnitt (60) schrittweise abgescannt wird und anschließend der Bereich (62) mit verändertem Divergenzwinkel Abschnitt (60) für Abschnitt (60) schrittweise abgescannt wird.

12. Verfahren nach einem der Ansprüche 7 bis 11,
**dadurch gekennzeichnet,**
**dass** die Objektszene (8) eine Unterwasserumgebung ist und aus der Objektszene (8) reflektiertes Licht der Strahlungsquelle (18) auf einen Detektor (14) geleitet und dort erfasst wird.
